**Europäisches Patentamt**

**European Patent Office**

**Office européen des brevets**

(19)

(11) Veröffentlichungsnummer: **0 412 103 B2**

(12)

# NEUE EUROPÄISCHE PATENTSCHRIFT

(45) Veröffentlichungstag der neue Patentschrift:
**26.04.95**

(51) Int. Cl.6: **F01N 3/20**, F01N 3/28, B01D 53/38

(21) Anmeldenummer: **89905407.6**

(22) Anmeldetag: **21.04.89**

(86) Internationale Anmeldenummer:
**PCT/EP89/00439**

(87) Internationale Veröffentlichungsnummer:
**WO 89/10471 (02.11.89 89/26)**

(54) **ELEKTRISCH LEITFÄHIGER WABENKÖRPER UND VERFAHREN ZU SEINER ÜBERWACHUNG UND SEINEM BETRIEB ALS ABGAS-KATALYSATOR-TRÄGERKÖRPER.**

(30) Priorität: **25.04.88 DE 3813928**

(43) Veröffentlichungstag der Anmeldung:
**13.02.91 Patentblatt 91/07**

(45) Bekanntmachung des Hinweises auf die Patenterteilung:
**04.12.91 Patentblatt 91/49**

(45) Bekanntmachung des Hinweises auf die Entsheidung über den Einspruch:
**26.04.95 Patentblatt 95/17**

(84) Benannte Vertragsstaaten:
**DE FR GB IT SE**

(56) Entgegenhaltungen:
**EP-B- 0 049 489        EP-B- 0 245 737**
**EP-B- 0 245 738        DE-A- 2 251 631**
**GB-A- 1 469 527        US-A- 3 723 070**
**US-A- 3 770 389        US-A- 3 889 464**

(73) Patentinhaber: **Emitec Gesellschaft für Emissionstechnologie mbH**
**Hauptstrasse 150**
**D-53797 Lohmar (DE)**

(72) Erfinder: **BREUER, Hans-Jürgen**
**Im Höhngesgarten 49**
**D-5063 Overath 5 (DE)**
Erfinder: **CYRON, Theodor**
**Kurt-Schumacher-Stra e 12**
**D-5060 Bergisch Gladbach 1 (DE)**
Erfinder: **MAUS, Wolfgang**
**Gut Horst**
**D-5060 Bergisch Gladbach 1 (DE)**
Erfinder: **SWARS, Helmut**
**Riedweg 11**
**D-5060 Bergisch Gladbach 1 (DE)**
Erfinder: **WIERES, Ludwig**
**Oppelner Stra e 2**
**D-5063 Overath (DE)**

(74) Vertreter: **Kahlhöfer, Hermann Bardehle-Pagenberg-Dost-Altenburg-Frohwitter-Geissler & Partner Patent- und Rechtsanwälte et al**
**Xantener Strasse 12**
**D-40474 Düsseldorf (DE)**

## Beschreibung

Elektrisch leitfähiger Wabenkörper und Verfahren zu seiner Überwachung und seinem Betrieb als AbgasKatalysator-Trägerkörper

Die vorliegende Erfindung betrifft einen elektrisch leitfähigen Wabenkörper, insbesondere als Trägeköper für Abgaskatalysatoren, aus gewickelten, gestapelten oder anderweitig geschichteten Lagen zumindest teilweise strukturierter hochtemperaturkorrosionsfester Bleche, die eine Vielzahl von für ein Fluid durchströmbaren Kanälen bilden, sowie Verfahren zu seinem Betrieb und seiner Überwachung.

Die wesentlichen Züge der erfindungsgemäßen Wabenkörper werden im folgenden anhand der Vorteile bei der Anwendung als Katalysator-Trägerkörper behandelt, jedoch schließt dies andere, vergleichbare Anwendungen nicht aus. So können solche Wabenkörper beispielsweise zur Aufheizung von Fluiden, zur Verdampfung von Flüssigkeiten etc. eingesetzt werden.

Ausgehend von dem weithin bekannten Stand der Technik bei Kraftfahrzeugkatalysatoren, nämlich dem geregelten Dreiwegekatalysator, beschäftigen sich die Ausführungsbeispiele der vortiegenden Erfindung hauptsächlich mit der Beschleunigung des Ansprechens, der Regelung und Überwachung solcher Katalysatoranordnungen.

Bisher werden in vielen Fällen zur Verringerung des Schadstoffausstoßes in der Kaltstartphase eines Kraftfahrzeuges sogenannte Startkatalysatoren, auch Vorkatalysatoren genannt, eingesetzt. Solche motornah eingebauten Startkatalysatoren, welche metallische Tragstrukturen aufweisen, werden schneller als die voluminösen Hauptkatalysatoren aufgeheizt, da sie näher am Motor angeordnet sind und ein geringeres Volumen aufweisen. Trotzdem benötigen auch Startkatalysatoren eine gewisse Zeit bis zum Ansprechen, da ihre katalytisch aktive Masse, deren keramisches Trägermaterial und die metallische Tragstruktur zunächst vom Abgas aufgeheizt werden müssen. Hierbei entziehen sie dem Abgas zunächst Wärme, wodurch auch die weiter hinten angeordneten Hauptkatalysatoren langsamer auf Betriebstemperatur kommen.

Als metallische Tragstrukturen sind verschiedene Varianten von Wabenkörpern bekannt, die zum Beispiel in folgenden Schriften ausführlich erläutert sind: EP-C-0 049 489, EP-C-0 121 174, EP-C-0 121 175, EP-A-0 245 737, EP-A-0 245 738

Insbesondere sind aus diesen Schriften auch sogenannte S-förmige Wabenkörper und auch solche mit U-förmigen Blechlagen bekannt.

Schließlich ist es auch seit langem bekannt, daß ein metallischer Wabenkörper elektrisch beheizt werden kann. Dies ist beispielsweise in der DE-PS-563 757 beschrieben. Andere Versuche, einen Katalysatorkörper mittels eines elektrischen Heizelementes zu beheizen, sind aus der DE-AS-22 30 663 bekannt. Die direkte elektrische Beheizung von Katalysator-Trägerkörpern stieß jedoch bisher auf große Schwierigkeiten, da die üblichen metallischen Strukturen einen zu geringen elektrischen Widerstand aufweisen, als daß sie mit den bei Kraftfahrzeugen üblichen und vorhandenen elektrischen Spannungen direkt als Heizkörper benutzt werden können. In der DE-PS-563 757 wurden daher nur gesonderte Teilbereiche beheizt, die so gestaltet sein konnten, daß sie einen geeigneten Widerstand haben. In der DE-AS-22 30 663 wird ein gesondertes Heizelement benutzt, welches nicht gleichzeitig als Katalysator-Trägerkörper dient.

Würde man andererseits bei spiralig gewickelten Wabenkörpern durch geeignete Isolation der Blechlagen die gesamte Länge des aufgewickelten Bleches ausnutzen, so würde sich ein zu hoher Widerstand ergeben, welcher keine genügende Stromstärke für die zur Beheizung erforderliche Leistung zulassen würde.

Aus der US-PS 3,770,389 ist ein typischer aus einer glatten und einer gewellten Blechlage spiralig gewickelter Wabenkörper bekannt, welcher entlang dieser beiden parallel geschalteten Blechlagen von Strom durchflossen wird. Aus der GB-PS 1496527 ist außerdem ein elektrisch beheizbarer Wabenkörper bekannt, welcher ebenfalls aus einer glatten und einer gewellten Blechlage spiralförmig aufgewickelt ist, bei dem jedoch die glatte und die gewellte Blechlage nicht parallel, sondern in Serie von Strom durchflossen werden, Eine zusätzliche, nicht durch die Wickeltechnik sich ergebende elektrische Unterteilung des Wabenkörpers zur Erzielung eines gewünschten Widerstandbereiches unabhängig vom Volumen des Wabenkörpers ist nicht vorgesehen.

Aufgabe der vorliegenden Erfindung ist daher die Modifizierung des Aufbaus eines metallischen Wabenkörpers mit dem Ziel, seinen Widerstand in weiten Grenzen unabhängig von seinem Volumen frei wählen zu können, so daß insbesondere eine Beheizung des Wabenkörpers mit den üblicherweise in Kraftfahrzeugen verfügbaren Spannungs- bzw. Stromquellen problemlos möglich wird. Zusätzlich oder alternativ soll die Möglichkeit gegeben sein, durch Beobachtung des temperaturabhängigen Widerstandes eines Wabenkörpers auf dessen Temperatur zu schließen und mit dieser Information Regelungs- oder Kontrollvorgänge zu ermöglichen.

Zur Lösung dieser Aufgabe lehrt die vorliegende Erfindung, daß der Wabenkörper durch Spalte und/oder elektrisch isolierende Zwischenschichten bzw. Beschichtungen bezüglich seiner Querschnittsfläche und/oder seiner axialen Ausdehnung elektrisch unterteilt sein soll, wobei zumindest ein Teilbereich des Wabenkörpers derart aus mindestens vier parallel von Strom durchflossenen Blechlagen gebildet ist, das der Wabenkörper einen elektrischen Widerstand zwischen 0,03 und 2 Ohm bildet, vorzugsweise zwischen 0,1 und 1 Ohm, insbesondere etwa 0,6 Ohm. Wie anhand der Zeichnung näher erläutert wird, hängt dabei die zur Erzielung eines bestimmten Widerstandes notwendige Zahl an Spalten und/oder Zwischenschichten von mehreren Parametern ab. Die Dicke der einzelnen Bleche, deren Struktur die Querschnittsfläche der einzelnen Kanäle und die Wahl des Materials üben einen Einfluß aus. Zur Anwendung können Bleche mit einer Dicke von etwa 0,03 bis 0,12 mm kommen, vorzugsweise 0,03 bis 0,06 mm. Übliche Materialien sind Stahlbleche mit Chrom- und Aluminium-Anteilen. Von der Erfindung werden verschiedene Varianten elektrisch beheizbarer Katalysator-Trägerkörper erfaßt. Gemeinsam ist diesen, daß sie durch Spalte und/oder elektrisch isolierende Zwischenschichten so unterteilt bzw. von ihrem Mantelrohr getrennt sind, daß sich mindestens ein elektrischer Strompfad durch den Katalysator-Trägekörper mit einem elektrischen Widerstand zwischen 0,03 und 2 Ohm ergibt. Ein Widerstand in diesem Bereich eignet sich insbesondere für eine elektrische Beheizung in üblichen 12-Volt-Anlagen. Zu berücksichtigen ist dabei, daß bei hohen Stromstärken bereits erhebliche Verluste in den Zuleitungen auftreten können, so daß am Katalysator-Trägerkörper selbst möglicherweise nur noch eine geringere Spannung, beispielsweise 10 Volt, anliegt.

Sofern in einem Fahrzeug mehrere elektrisch beheizbare Katalysatoren vorhanden sind, so gibt es immer verschiedene Varianten der elektrischen Zusammenschaltung. Entweder können die einzelnen Körper mit einem hohen Widerstand ausgebildet sein und dann parallel geschaltet werden, oder sie weisen einen relativ niedrigen elektrischen Widerstand auf und sind dementsprechend in Reihe geschaltet. Auch zeitabhängige Umschaltung von Parallel- zu Reihenschaltung kann vorgesehen werden, sofern die elektrische Heizleistung abhängig vom Betriebszustand variiert werden soll.

Die üblicherweise verwendeten hochtemperaturkorrosionsfesten Bleche mit einer Dicke von etwa 0,03 bis 0,06 mm hätten auf der gesamten Länge die für die Bildung eines Katalysator-Trägerkörpers benötigt wird, einen für die vorgesehene elektrische Beheizung zu hohen Widerstand. Ein Katalysator-Trägerkörper bei welchem sich alle strukturierten Bleche berühren oder sogar fügetechnisch verbunden sind, hätte einen zu geringen Widerstand für eine elektrische Beheizung mit 12 Volt. Im Ergebnis muß daher ein Katalysator-Trägerkörper so unterteilt werden, daß abhängig von seinem Gesamtvolumen ein Strompfad mit einem geeigneten Zusammenwirken von Länge und Leitfähigkeit entsteht. Eine Möglichkeit ist dabei die Unterteilung des Querschnittes in elektrisch hintereinander gereihte Segmente, die beispielsweise jeweils aus mehr als vier parallel geschalteten Blechlagen bestehen, vorzugsweise aus acht bis zwölf Blechlagen.

Eine weitere Möglichkeit ist die Unterteilung des Katalysator-Trägerkörpers in axial hintereinanderliegende Schichten, welche elektrisch in Reihe geschaltet sind. Beide Möglichkeiten können auch kombiniert verwendet werden, wie anhand der Ausführungsbeispiele erläutert wird.

Einige Besonderheiten ergeben sich bei der Einbindung des elektrisch beheizbaren Katalysator-Trägerkörpers in ein Mantelrohr, da hier zumindest Teile des Katalysator-Trägerkörpers von dem Mantelrohr elektrisch isoliert sein müssen. Ferner müssen geeignete isolierte Durchführungen für die elektrischen Zuleitungen vorgesehen werden. Dies bereitet jedoch beispielsweise bei Verwendung von aus Halbschalen zusammengesetzten Mantelrohren keine größeren Probleme. Die Isolierung zwischen Katalysator-Trägerkörper und Mantelrohr kann dabei gleichzeitig eine thermische und elektrische Isolierung bewirken, was besonders vorteilhaft ist.

Die Erfindung betrifft auch Problemlösungen bei einigen Einzelheiten für spezielle Anwendungen. Wie anhand der Zeichnung näher erläutert wird, kann es zur Vergleichmäßigung der Verteilung der Stromdichte im Wabenkörper sinnvoll sein, Anschlußstreben an einer oder beiden Stirnseiten eines Wabenkörpers vorzusehen. Bei zu erwartenden Relativdehnungen zwischen beheizbarem Wabenkörper und seinem Mantelrohr muß ggf. eine elektrische Zuleitung elastisch ausgeführt sein, damit diese Dehnungen kompensiert werden können. Eine solche Zuleitung muß ggf. für Stromstärken von 50 bis 400 Ampère ausgelegt sein.

Bei zu erwartenden hohen axialen mechanischen Belastungen eines Wabenkörpers kann es wichtig sein, elektrisch voneinander isolierte Blechlagen durch Formschlußverbindungen an einer axialen Verschiebung zu hindern. Bekanntermaßen sind keramische Isolierschichten nicht in hohem Maße auf Zug belastbar. Hier kann eine Formschlußverbindung helfen, die auftretenden Kräfte aufzunehmen. Insbesondere, wenn die Formschlußverbindung eine Tiefe hat, welche größer als die Dicke der Isolierschicht ist, führen axiale Kräfte hauptsächlich zu Druckbelastungen der keramischen Zwischenschicht in diesem Bereich und nicht zu Zugbelastungen.

Elektrisch leitfähige Katalysator-Trägerkörper, insbesondere die bisher beschriebenen, aber auch andere, z. B. pulvermetallurgisch hergestellte, können, wenn sie zumindest teilweise gegenüber ihrem Mantel und ihren Haltetungen isoliert und mit einer katalytisch aktiven Beschichtung versehen in Abgassystemen eines Verbrennungsmotors eingesetzt werden, dadurch überwacht werden, daß ihr elektrischer Widerstand insgesamt oder in einem Teilbereich gemessen und zur Überwachung und/oder zur Regelung des Katalysator-Abgassystems herangezogen wird. Mit steigender Temperatur steigt auch der elektrische Widerstand des Wabenkörpers. Dies kann zur Überwachung und zur Regelung einer elektrischen Beheizung nutzbar gemacht werden. Neben dem Effekt, daß die von einem Katalysator-Trägerkörper aufgenommene Heizleistung bei gleichbleibender anliegender Spannung sinkt, kann der Heizvorgang auch ab Unterschreiten einer vorbestimmbaren Schwelle des elektrischen Widerstandes beendet werden. Auch das Nachheizen eines Katalysators, dessen Betriebstemperatur, beispielsweise im stockenden Verkehr, wieder unter die Zündtemperatur der katalytischen Reaktion gesunken ist, kann aufgrund einer Widerstandsmessung ausgelöst werden. Dabei kann der Heizstromkreis selbst zur Widerstandsmessung herangezogen werden, indem dieser periodisch kurzzeitig eingeschaltet und die aufgenommene Heizleistung oder eine dieser Heizleistung proportionale Größe gemessen wird.

Ausführungsbeispiele und das Umfeld der Erfindung sind in der Zeichnung, teilweise schematisch, dargestellt. Es zeigen

Figur 1 ein teilweise zweisträngig aufgebautes Abgassystem eines Kraftfahrzeuges mit unterschiedlichen Positionen für die Start- und Hauptkatalysatoren,

Figur 2 eine Prinzipschaltung für elektrisch beheizbare Katalysatoren,

Figur 3 eine Prinzipschaltung für scheibenweise beheizbare Katalysatoren,

Figur 4 ein Diagramm über Temperaturen im Abgas- bzw. Katalysatorsystem eines Kraftfahrzeuges in Abhängigkeit von der Zeit nach dem Betriebsbeginn,

Figur 5 einen mäanderförmig geschichteten Katalysator-Trägerkörper,

Figur 6 einen Katalysator-Trägerkörper mit U-förmig verlaufenden Blechlagen und entsprechenden Strompfaden,

Figur 7 einen Blechstapel mit Einschnürungen,

Figur 8 einen aus diesem Blechstapel hergestellten, mäanderförmig geschichteten Katalysator-Trägerkörper,

Figur 9 einen Ausschnitt aus Figur 8 zur Verdeutlichung der Isolierung des Blechstapels gegenüber dem Mantelrohr,

Figur 10 einen elektrisch beheizbaren Katalysator-Trägerkörper aus einem gegensinnig verschlungenen Blechstapel (S-Form) mit isolierenden Zwischenschichten,

Figur 11 einen aus Katalysatorkörpern gemäß Figur 10 zusammengesetzten Mehrscheibenkatalysator mit schematisch angedeuteter elektrischer Zusammenschaltung,

Figur 12 einen weiteren Katalysator-Trägerkörper aus gegensinnig verschlungenen Blechen mit Mantelrohr und Ausführung der elektrischen Anschlüsse,

Figur 13 einen Längsaxialschnitt durch einen Katalysator-Trägerkörper, der aus zwei Scheiben gemäß Figur 12 aufgebaut ist,

Figur 14 eine Einbauart für elektrisch leitfähige Katalysator-Trägerkörper in schematischer Darstellung, teilweise längsaxial geschnitten,

Figur 15 und Figur 16 verschiedene Varianten für stirnseitige Anschlußstreben und

Figur 17 eine elektrisch isolierende Formschlußverbindung zwischen zwei Blechlagen.

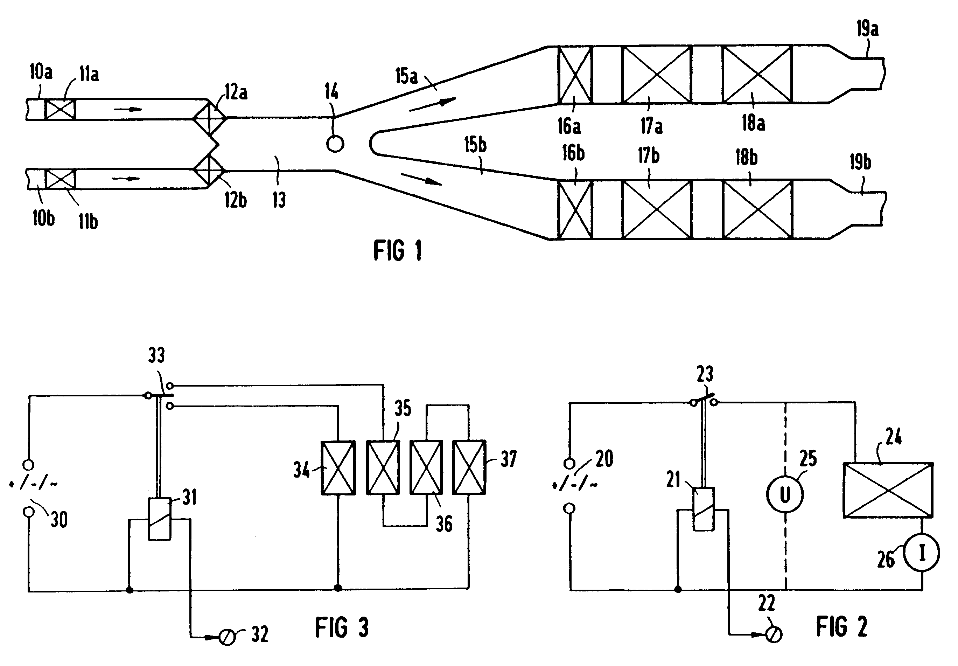

In Figur 1 ist schematisch ein teilweise zweisträngiges Abgassystem eines Kraftfahrzeuges dargestellt. Die im folgenden gemachten Ausführungen gelten jedoch auch für einsträngig aufgebaute Anlagen, bei denen jeweils der untere Zweig 10b, 11b, 12b, 15b, 16b, 17b, 18b, 19b entfällt. Das Auspuffsystem führt die Abgase mit Motorauslaßleitungen 10a, 10b zu einer Mischstrecke 13, in der eine Larnda-Sonde angeordnet ist. Von dort führen Abgasleitungen 15a, b zu den Hauptkatalysatoren 17a, 17b, 18a, 18b und von dort zu Auspuffleitungen 19a, 19b. Ob die Hauptkatalysatoren aus nur einem Körper oder, wie dargestellt, aus zwei Körpern bestehen, hängt von der Größe und Leistung des Motors ab. In Figur 1 sind drei mögliche Positionen für elektrisch beheizte Start-Katalysatoren angegeben. Die Position 1 ist mit 11a, 11b bezeichnet, Position 2 mit 12a, 12b und Position 3 mit 16a, 16b. Im folgenden werden die Vor- und Nachteile dieser Positionen einzeln abgehandelt, jedoch sind auch Kombinationen denkbar, bei denen zwei oder alle diese Positionen mit beheizten Katalysatoren bestückt werden. Außerdem ist es möglich, die Hauptkatalysatoren 17a, 17b, 18a, 18b selbst elektrisch zu beheizen, was allerdings höhere elektrische Leistungen erfordert, dafür aber u. U. Start-Katalysatoren überflüssig machen kann.

Position 1 ist die für Startkatalysatoren übliche Anordnung, wobei die Katalysatoren wegen ihrer Motornähe schnell aufgeheizt werden und daher frühzeitig ansprechen, allerdings dabei auch hohe thermische Wechselbelastungen ertragen müssen. Durch elektrische Beheizung kann das Ansprechverhalten in dieser Position noch verbessert werden, jedoch ist der folgende Abgasweg bis zur Position der Hauptkatalysatoren relativ lang, so daß sich die Abgase kurz nach Betriebsbeginn zunächst bis zum Hauptkatalysator wieder soweit abkühlen können, daß das Ansprechverhalten der Hauptkatalysatoren nur in begrenztem Umfang verbessert wird.

Die Position 2 liegt einerseits etwas weiter entfernt vom Motor, so daß die thermischen Wechselbelastungen der Katalysator-Trägerkörper verringert werden, und andererseits schon näher am Hauptkatalysator, so daß dessen Ansprechverhalten schon etwas begünstigt wird. Zusätzlich hat die Position 2 den Vorteil, daß die dort frühzeitig ansprechenden Katalysatoren das Ansprechverhalten der Lamda-Sonde 14 verbessern.

Die Position 3 ist günstig, um mit dem Ansprechen der Startkatalysatoren 16a, 16b auch das Ansprechen der Hauptkatalysatoren 17a, 17b, 18a, 18b schnell zu fördern. Durch die Entfernung vom Motor sprechen allerdings die Startkatalysatoren in dieser Position trotz Beheizung erst später an.

In jeder der angegebenen Positionen haben Startkatalysatoren, insbesondere elektrisch beheizbare Startkatalysatoren, jedoch erhebliche Vorteile, so daß es von den einzelnen Randbedingungen abhängt, welche der Positionen oder welche Kombination dieser Positionen besonders günstig ist. Dabei ist auch nicht entscheidend, ob es sich bei den Trägerkörpern der Hauptkatalysatoren um keramische oder metallische Träger handelt.

In den Figuren 2 und 3 sind schematische Prinzipschaltungen für elektrisch leitfähige bzw. beheizbare Katalysatoren angegeben. In Figur 2 wird der Katalysator 24 aus einer Stromquelle 20 über einen Schalter 23 mit Strom versorgt. Hier wie im folgenden ist durch die Bezeichnung +/-/~ angedeutet, daß es für das Wesen der Erfindung keine Rolle spielt, ob die Stromversorgung aus einer Batterie und mit Gleichstrom oder aus einer Lichtmaschine und mit Wechselstrom erfolgt. Im allgemeinen wird nach dem Erreichen bestimmter Betriebszustände eine weitere elektrische Beheizung des Katalysators nicht mehr notwendig sein, weshalb der Schalter 23 mit einem Zeitrelais 21 und dem Zündschloß 22 gekoppelt ist. Mit der in Figur 2 gezeigten Anordnung ist es, was ein wesentlicher Punkt der vorliegenden Erfindung ist, prinzipiell auch möglich, Rückschlüsse auf den jeweils aktuellen (d. h. temperaturabhängigen) Widerstand R(T) des Katalysators 24 zu ziehen. Im einfachsten Fall kann der Widerstand R durch eine Spannungsmessung 25 und eine Strommessung 26 aus $R = \frac{U}{I}$ (U-Spannung; I-Strom) bestimmt werden, wobei evtl. die Spannung sogar als konstant und bekannt vorausgesetzt werden kann. Der Widerstand R wiederum ist direkt proportional der Temperatur $T_K$ des Katalysator-Trägerkörpers. Somit ergibt sich die Möglichkeit einer Selbstregelung des Heizvorganges, indem dieser bei Unterschreiten eines vorgegebenen Stromes $I_{min}$ beendet wird, weil dann eine genügend hohe Temperatur $T_K$ erreicht ist. Weiter ist es möglich, durch regelmäßiges kurzzeitiges Einschalten und Messen des Heizstromes (oder durch ein anderes Widerstandsmeß-system) festzustellen, ob die Temperatur $T_K$ des Katalysators noch über der Zündtemperatur $T_Z$ für die katalytische Umsetzung liegt. Falls nicht, kann wieder elektrisch geheizt werden. Ferner ermöglicht die Aufnahme des zeitlichen Verhaltens des Widerstandes R des Katalysator-Trägerkörpers (im Fahrzeug selbst oder bei einer Werkstattuntersuchung) einen Rückschluß auf die Funktionsfähigkeit des Katalysators, da das Einsetzen der exothermen katalytischen Reaktion sich durch schnelles Ansteigen des Widerstandes R bemerkbar macht. Eine entsprechende Anzeige im Fahrzeug, z. B. eine grüne Lampe, ist leicht realisierbar.

Auch in Figur 3 wird ein elektrisch beheizbarer Katalysator aus einer Stromquelle 30 über einen Schalter 33 mit Strom versorgt, welcher über ein Zeitrelais 31 mit dem Zündschloß 32 in Verbindung steht. In diesem Ausführungsbeispiel besteht jedoch der Katalysator aus mehreren einzeln beheizbaren Teilbereichen 34, 35, 36, 37, bei welchen zunächst der erste Teilbereich 34 einzeln und mit höherem Strom beheizt werden kann, und erst später die anderen Teilbereiche 35, 36, 37, vorzugsweise in Reihenschaltung, zugeschaltet werden.

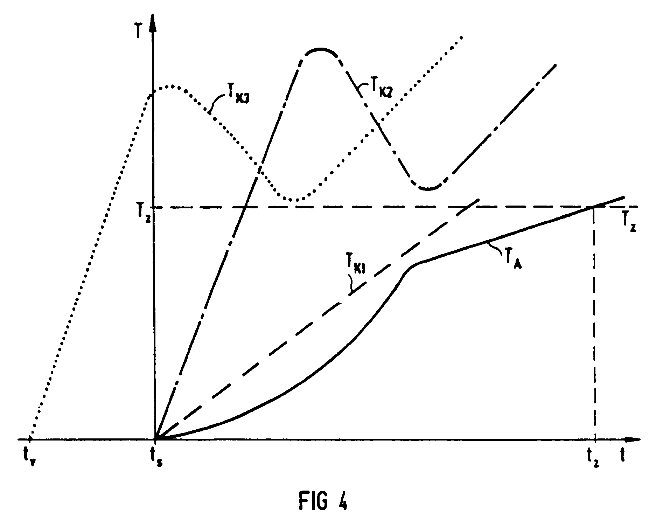

Wie anhand von Figur 4 näher erläutert wird, können beim Betrieb elektrisch beheizbarer Katalysatoren verschiedene alternative Systeme benutzt werden. Im Diagramm der Figur 4 ist auf der Ordinate die Temperatur T gegen die Zeit t auf der Abszisse aufgetragen. Mit $T_Z$ ist die Zündtemperatur eines üblichen Katalysators, beispielsweise etwa 350 °C, bezeichnet und mit $t_z$ der Zündzeitpunkt, d. h. der Zeitpunkt, bei dem ohne Zusatzmaßnahmen die katalytische Reaktion in nennenswertem Umfange einsetzt. Die Kurve $T_A$ zeigt den Verlauf der Abgastemperatur vor dem Katalysator in Abhängigkeit von der Zeit nach dem Starten des Motors zum Zeitpunkt $t_s$. Die gestrichelte Kurve $T_{K1}$ zeigt den Temperaturverlauf in einem elektrisch beheizten Katalysator-Trägerkörper. Wählt man die Heizleistung für einen Katalysator-Trägerkörper so, daß sich seine Temperatur $T_{K1}$ immer etwas oberhalb der Abgastemperatur $T_A$ befindet, so vermeidet man, daß dem Abgas Wärme zur Aufheizung des Katalysator-Trägerkörpers entzogen wird. Man kann zwar mit der elektrischen Leistung nicht das Abgas selbst nennenswert aufheizen, jedoch wird eine Abkühlung vermieden. Bei dieser Betriebsweise wird die keramische und die katalytisch aktive Masse des Katalysators von außen durch das Abgas und von innen durch den Katalysator-Trägerkörper gleichzeitig aufgeheizt und erreicht dadurch deutlich eher die Temperatur $T_z$, bei der die (exotherme) Reaktion einsetzt und von selbst für eine weitere Aufheizung sorgt. Wegen der nicht beliebig hohen verfügbaren elektrischen Leistung zum Aufheizen der Katalysatoren kann es nötig sein, gemäß einer Schaltung der Figur 3 zunächst nur einen Teilbereich, nämlich die vorderste Scheibe eines Katalysators von beispielsweise etwa 3,5 bis 6 cm axialer Höhe zu beheizen, um dort die exotherme Reaktion möglichst schnell in Gang zu bringen. Einen möglichen Temperaturverlauf für diese Scheibe zeigt die mit $T_{K2}$ bezeichnete Kurve. Dabei wird die Temperatur mit einem hohen, auf einen kleinen Teilbereich begrenzten Kurzschlußstrom sehr schnell stark erhöht, beispielsweise auf 600 °C und dann auf die Beheizung der anderen Katalysator-Teilbereiche umgeschaltet. Dadurch kühlt sich die erste Scheibe zwar wieder etwas ab, jedoch unterschreitet sie bei genügender Vorheizung nicht mehr die Zündtemperatur und hält dadurch die exotherme Reaktion mit dem Abgas in Gang, was wiederum die nachfolgenden Teilbereiche in ihrem Ansprechverhalten begünstigt. Die Kurve $T_{K3}$ zeigt den Temperaturverlauf eines vor dem Starten des Motors vorgeheizten Katalysator-Trägerkörpers. Ab dem Beginn des Vorheizens zum Zeitpunkt $t_v$ bis zum Startzeitpunkt $t_s$ steigt die Temperatur steil und über die Zündtemperatur $T_z$ an und unterschreitet diese nicht mehr.

An dieser Stelle seien einige prinzipielle Überlegungen bezüglich der elektrischen Beheizung von Katalysatoren eingefügt. Folgende Punkte sind dabei zu beachten:

a) Sofern Katalysatoren noch vor dem Anlassen des Motors vorgeheizt werden sollen, muß ihre Leistungsaufnahme so bemessen sein, daß keine zu lange Wartezeit entsteht, aber auch die Batterie nicht zu sehr belastet wird. Je nach dem verfolgten Konzept kommen Stromaufnahmen zwischen etwa 40 und 400 A (bei 12-V-Systemen) in Betracht, um die Batterie nicht zu sehr zu belasten und trotzdem das Ansprechverhalten der Katalysatoren deutlich zu beeinflussen.

b) Falls die Katalysatoren erst nach dem Anlassen des Motors beheizt werden, können sie länger oder mit höherer Leistung versorgt werden, jedoch ist die zulässige Belastung der Lichtmaschine und die im Rahmen der erforderlichen Verkabelung maximale sinnvolle Stromstärke zu berücksichtigen. Insbesondere müssen Gesichtspunkte der Feuergefährlichkeit der elektrischen Anlagen beachtet werden.

Unter diesen Vorgaben ist davon auszugehen, daß für die elektrische Beheizung von Katalysatoren bei mit 12 Volt Spannung arbeitenden elektrischen Anlagen Stromstärken von etwa 5 bis 400 Ampère zur Beheizung von Katalysatoren oder einzelnen Katalysator-Bereichen benutzt werden können. Dies bedeutet, daß der elektrische Widerstand der zur Beheizung der Katalysatoren dienenden Strompfade, wie in der Beschreibungseinleitung bereits erläutert, bestimmte Werte nicht über- bzw. unterschreiten sollen. Bei aus einzelnen Blechlagen aufgebauten Katalysator-Trägerkörpern läßt sich für den Widerstand R folgende Beziehung ermitteln:

$$R = \frac{\rho \cdot L}{z \cdot b \cdot h}$$

mit

$\rho$ = spez. elektr. Widerstand
L = Lagenlänge (ggf. unterschiedlich für glatte und gewellte Bleche)
b = Foliendicke
h = Folienhöhe
z = Lagenzahl

Ist ein Katalysator aus N Katalysatorscheiben mit der Höhe h aufgebaut, so ist der Widerstand bei Reihenschaltung noch entsprechend mit N zu multiplizieren.

Für die von einem Strom I in einem Leiter erzeugte Wärme gilt:

$$Q = U \cdot I \cdot t = I^2 \cdot R$$

mit

Q = Wärmemeng
U = Spannung
I = Strom
t = Zeit
R = Widerstand

Für die zum Aufheizen eines Körpers auf die Temperatur T benötigte Wärmemenge gilt:

$$Q = c \cdot m \cdot \Delta T$$

mit

c = spez. Wärme
m = Masse
$\Delta T$ = Temperaturdifferenz,

woraus eine Aufheizzeit durch reine elektrische Widerstandsbeheizung von

$$t_{el} = \frac{c \cdot m \cdot \Delta t}{U \cdot I}$$

folgt. Die tatsächliche Aufheizzeit unter Einbeziehung der dem Katalysator durch die Abwärme des Motors zugeführte Wärmemenge ist deutlich kürzer, nach Erfahrungswerten nur etwa $\frac{1}{2} t_{el}$.

Die im folgenden beschriebenen Ausführungsbeispiele der Erfindung zeigen verschiedene Möglichkeiten, Katalysator-Trägerkörper aus metallischen Blechen so aufzubauen, daß Strompfade mit einem für eine elektrische Beheizung geeigneten Widerstand entstehen. Dabei ist die Erfindung nicht auf die Ausführungsbeispiele beschränkt, sondern soll auch die fachmännischen Abwandlungen und nach dem Stand der Technik äquivalente Ausführungsformen betreffen. Insbesondere braucht es sich bei den Blechlagen nicht um abwechselnd angeordnete glatte und gewellte Blechlagen zu handeln, sondern es können auch andersartig strukturierte Bleche, wie sie in vielen Variationen im Stand der Technik bekannt sind, gleichermaßen verwendet werden.

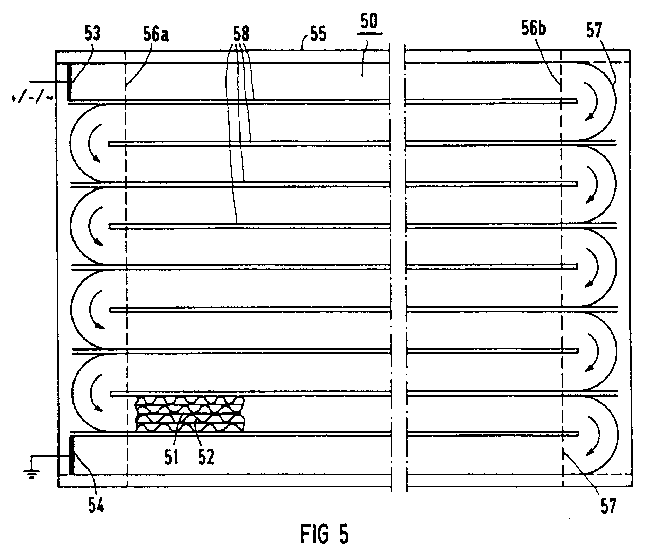

Figur 5 zeigt einen mäanderförmig geschichteten Katalysator-Trägerkörper 50, welcher aus einem immer wieder mit Umlenkungen 57 versehenen Stapel von glatten 51 und gewellten 52 Blechen besteht. Im vorliegenden Ausführungsbeispiel wird der Stapel durch vier gewellte 52 und drei glatte Blechlagen 51 gebildet, wobei die Ober- und die Unterseite des Stapels aus gewellten Blechlagen bestehen, Zwischen den Mäanderschleifen sind jeweils elektrisch isolierende Zwischenschichten 58 angeordnet, die einen direkten elektrischen Kontaktzwischen den einzelnen Mäanderschleifen verhindern. An den Enden des Stapels sind dessen Bleche jeweils leitend miteinander verbunden und mit einer Stromzuleitung 53 und einer Stromableitung 54, bzw. dafür geeigneten Anschlußstücken versehen. Der ganze Körper ist in einem Gehäuse oder Mantelrohr 55 angeordnet. An den Stirnseiten weist der Bereich der Umlenkungen 57 gestrichelt ange deutete Randabdeckungen 56a, 56b auf, welche einerseits unerwünschte Strömungen zwischen den Umlenkungen 57 und dem Gehäuse 55 verhindern und andererseits die Mäanderschleifen und isolierenden Zwischenschichten 58 fixieren. Der Widerstand einer solchen Anordnung kann in weiten Grenzen durch die Zahl der Bleche in dem mäanderförmigen Blechstapel variiert werden. Außerdem können mit dieser Art der Anordnung auch nicht rechteckige Querschnitte ausgefüllt werden.

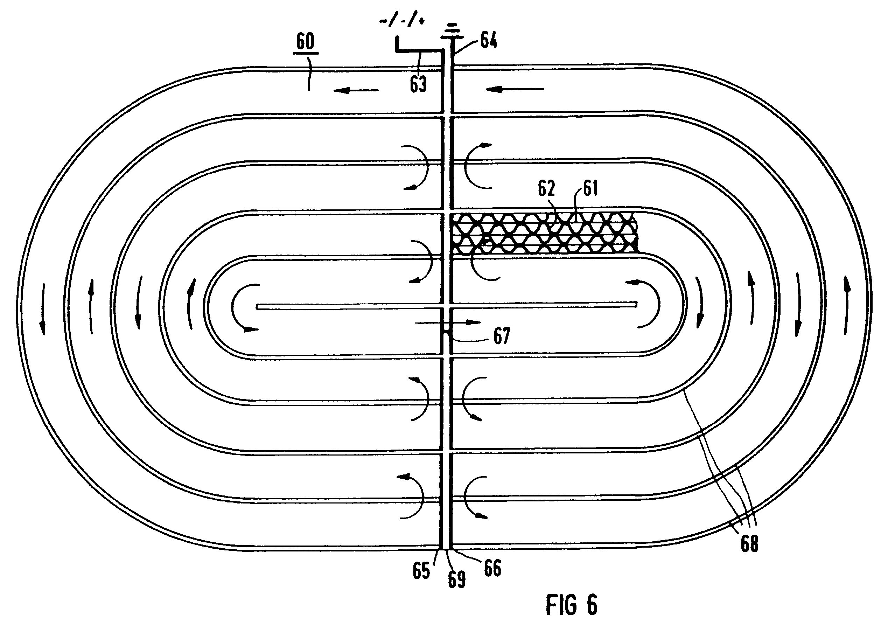

Figur 6 zeigt beispielhaft eine an sich bekannte Katalysatoranordnung mit U-förmig gebogenen glatten 61 und gewellten 62 Blechlagen, welche mit ihren Enden an einer Tragwand 65, 66, 69 befestigt sind. Erfindungsgemäß ist auch diese Anordnung durch isolierende Zwischenschichten 68 und eine spezielle Unterteilung der Tragwand 65, 66, 69 in elektrisch leitende 65, 66 Abschnitte und eine elektrisch isolierende Struktur 69 so unterteilt, daß sich Strompfade mit einem geeigneten Widerstand ergeben. Wie durch Pfeile angedeutet, fließt der Strom nacheinander durch verschiedene Gruppen von U-förmigen, einander benachbarten Blechen, wobei elektrisch leitfähige Abschnitte der Tragwand jeweils die Verbindung zur nächsten Gruppe herstellen. Im Inneren des Körpers weist die Tragwand eine durchgehende elektrische Verbindung 67 zu einem gegenüberliegenden elektrisch leitfähigen Abschnitt auf, so daß auf beiden Seiten der Tragwand 69 liegende Gruppen von U-förmigen Blechen in die Stromzuführung einbezogen werden. Die Stromableitung 64 erfolgt bei diesem Ausführungsbeispiel nahe der Stromzuleitung 63. Der ganze Katalysator-Trägerkörper 60 muß ggf. noch in einem nicht dargestellten Mantelrohr angeordnet werden, dem gegenüber die äußersten Blechlagen ggf. isoliert sein müssen und durch welches die Stromzuleitung 63 und die Stromableitung 64 ggf. isoliert hindurchgeführt werden müssen.

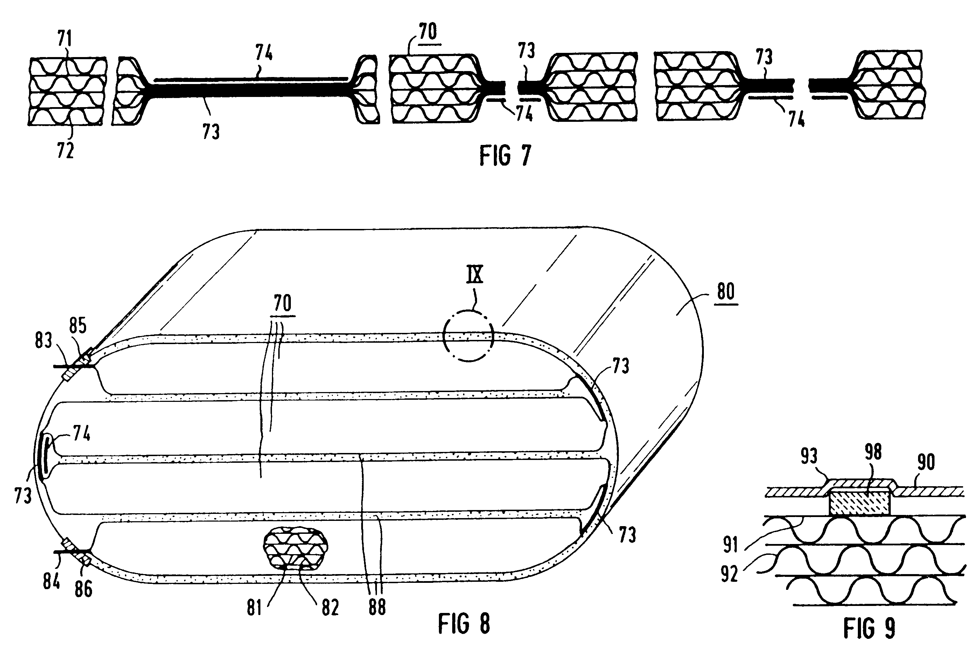

Ein weiteres Ausführungsbeispiel der Erfindung wird in den Figuren 7, 8 und 9 dargestellt. Figur 7 zeigt einen Teil eines sehr lang gestreckten Blechstapels 70, welcher zumindest abschnittsweise aus glatten 71 und gewellten 72 Blechstreifen besteht. Dieser Stapel hat in Abständen Einschnürungen 73. Solche Einschnürungen können entweder entstehen, wenn die gewellten Bleche 72 abschnittsweise nicht gewellt sind oder aber durch Zusammenquetschen des Stapels in den gewünschten Bereichen. Es ist beispielsweise auch möglich, einen solchen Stapel zunächst ohne Einschnürungen herzustellen und an den Berührungsstellen zwischen glatten 71 und gewellten 72 Blechen zu verlöten und dann erst die Einschnürungen zusammenzuquetschen. Aus einem so gestalteten Stapel kann ein Katalysator-Trägerkörper 80, wie in Figur 8 dargestellt, geschichtet werden. Es handelt sich im Prinzip wieder um eine mäanderförmige Schichtung, nur daß hierbei die Umlenkungen von den Einschnürungen 73 des Stapels 70 gebildet werden. Auf diese Weise lassen sich gewünschte Querschnittsformen leichter herstellen und unregelmäßig gestaltete Randbereiche verkleinern. Die nicht vom Abgas umströmten Einschnürungen 73 können zur Senkung des elektrischen Widerstandes in diesem Bereich mit Verstärkungen 74 versehen sein. Die glatten 81 und gewellten 82 Bleche des Stapelswerden an den Enden elektrisch leitend verbunden und enden in einer Stromzuleitung 83 bzw. einer Stromableitung 84, welche durch Isolierstücke 85, 86 durch ein den Körper umgebendes Mantelrohr geführt sind. Die einzelnen Mäanderschleifen und auch die Außenseite des Stapels sind mittels Isolierschichten 88 voneinander und vom Mantelrohr elektrisch getrennt. Figur 9 zeigt einen vergrößerten Ausschnitt aus Figur 8 mit einem Beispiel für eine mögliche Isolation gegenüber dem Mantelrohr. Das Mantelrohr 90 kann beispielsweise Taschen 93 aufweisen, in welche Keramikplättchen eingelegt und ggf. dort angelötet sind. Diese Keramikplättchen 98 halten den Stapel aus glatten 91 und gewellten 92 Blechen auf Abstand vom Mantelrohr 90, wodurch sowohl eine elektrische wie eine thermische Isolation erreicht wird. Als Isolation kommen jedoch auch keramische Fasermatten oder andere keramische Materialien in Betracht.

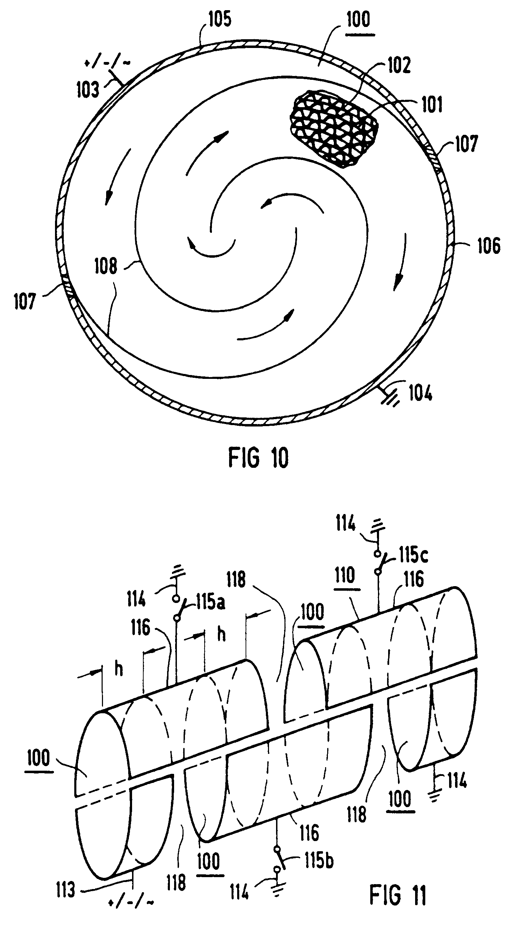

Figur 10 zeigt ein weiteres besonders günstiges Ausführungsbeispiel der Erfindung, nämlich einen an sich bekannten Katalysator-Trägerkörper 100 aus einem Stapel gegensinnig verschlungenerglatter 101 und gewellter 102 Bleche. Ein solcher Aufbau von Katalysatorkörpern ist an sich bekannt und wird häufig als S-förmig bezeichnet. Diese Ausführungsform bietet die Möglichkeit, die Ober- und Unterseite des Stapels mit Isolierschichten 108 oder einer isolierenden Beschichtung zu versehen, wodurch beim gegensinnigen Verschlingen des Stapels ein relativ langer elektrischer Strompfad, wie er durch P feile angedeutet ist, entsteht. Seine Länge hängt vom Verhältnis der Höhe des Ausgangsstapels zum Durchmesser des Katalysator-Trägerkörpers ab. Sofern die Blechlagen 101, 102 mit ihren Enden an voneinander isolierten elektrisch leitenden Halbschalen 105, 106 befestigt sind, lassen sich an diesen Halbschalen eine Stromzuleitung 103 und eine Stromableitung 104 anbringen. Die Halbschalen 105, 106 müssen dazu beispielsweise durch Isolierstücke 107 voneinander getrennt sein, wobei die Isolierschichten 108 gerade im Bereich dieser Isolierstücke 107 enden müssen. Die ganze Anordnung wird üblicherweise noch elektrisch isoliert in einem nicht dargestellten Mantelrohr untergebracht, durch welches die Stromzuleitung 103 und die Stromableitung 104 isoliert hindurchgeführt werden müssen. Generell kann bei praktisch allen Ausführungsbeispielen auch auf die Stromableitung verzichtet werden, wenn eine gut leitende Verbindung zum Gehäuse und damit zur Masse des Kraftfahrzeuges hergestellt wird. Mit gegensinnig verschlungenen Blechen lassen sich im übrigen auch viele andere Querschnitte in an sich bekannter Weise ausfüllen, so daß dieses Ausführungsbeispiel nicht auf runde Querschnitte beschränkt ist.

Sollte der erzielbare elektrische Widerstand eines gemäß Figur 10 aufgebauten elektrisch beheizbaren Katalysator-Trägerkörpers in Anbetracht der gewünschten axialen Länge nicht hoch genug sein, so kann eine Zusammenschaltung von mehreren hintereinander angeordneten Scheiben beispielsweise gemäß Figur 11 erfolgen. Das dort dargestellte Ausführungsbeispiel besteht aus vier hintereinander geschalteten, gemäß Figur 10 ausgebildeten Scheiben 100 der Höhe h, wobei die Reihenschaltung der einzelnen Scheiben durch je zwei Scheiben erfassende Halbzylinderschalen 116 angedeutet ist. Der gesamte Körper weist eine Stromzuleitung 113 auf und bis zu vier Stromableitungen 104, welche jeweils über Kurzschlußschalter 115a, 115b, 115c zu- bzw. abgeschaltet werden können. Spalte 118 zwischen den einzelnen Scheiben 100 sorgen für die elektrische Isolierung in axialer Richtung, während der ganze Körper wiederum elektrisch isoliert in einem nicht dargestellten Mantelrohr untergebracht werden kann. Die schematisch angedeutete elektrische Schaltung dieser Anordnung ermöglicht folgende Betriebsweise:
Zu Beginn kann die in Abgasrichtung gesehen vorderste Scheibe 100 durch Schließen des Schalters 115a allein mit einem sehr hohen, dem Widerstand der Scheibe entsprechenden Strom beaufschlagt werden. Sie heizt sich daher schnell gemäß dem Anfang der Kurve $T_{K2}$ aus Figur 4 auf. Nach Ablauf eines bestimmten Zeitintervalls, beispielsweise 10 Sekunden, kann der Schalter 115a geöffnet werden, so daß bei geöffneten Schaltem 115b, 115c sämtliche Scheiben einen um einen Faktor 4 geringeren Heizstrom zur weiteren Aufheizung erhalten. Auch ein in vorgegebenen Zeitintervallen aufeinanderfolgendes einzelnes Öffnen der Schalter 115a, 115b und 115c ist möglich, um den Katalysator scheibenweise mit abnehmender Leistung aufzuheizen. Dies ermöglicht ein schnelles Anspringen des Katalysators bei gleichzeitig nur kurzzeitig hohem Stromverbrauch.

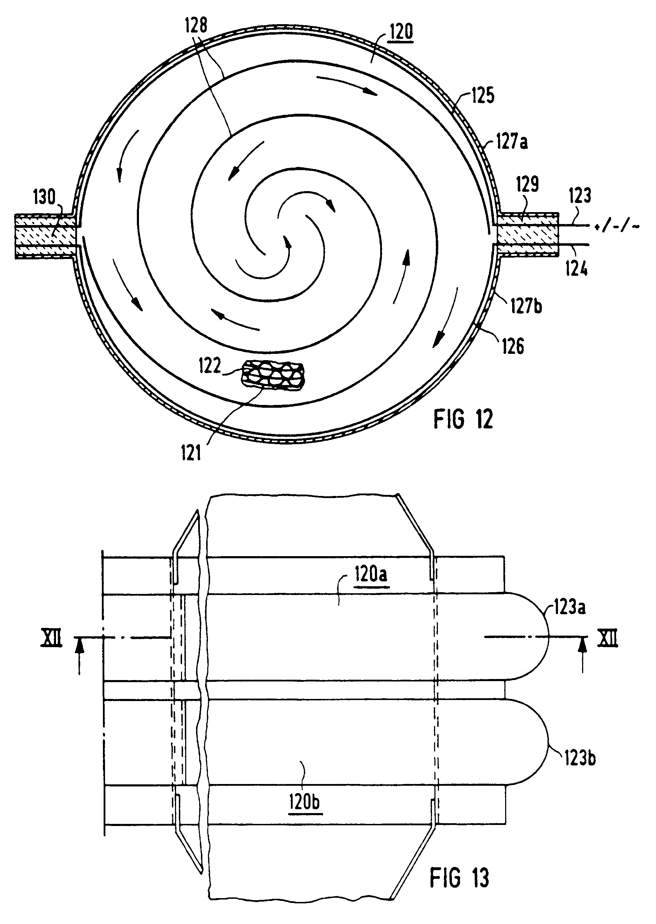

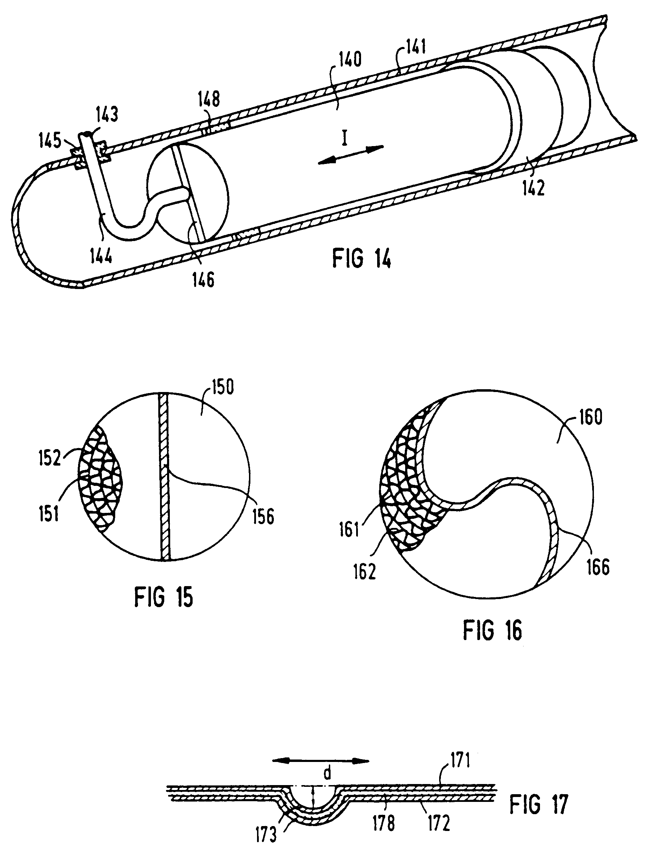

Die Figuren 12 und 13 zeigen nochmals einen S-förmigen, elektrisch beheizbaren Katalysator-Trägerkörper in einem Querschnitt (Figur 12) und einem Längsschnitt (Figur 13). In Figur 12 ist neben dem der Figur 10 entsprechenden eigentlichen Katalysator-Trägerkörper 120 aus gegensinnig verschlungenen glatten 121 und gewellten 122 Blechen auch die Einbindung des Systems und der Anschlüsse in ein Mantelrohr 127a, 127b dargestellt. Das Mantelrohr besteht aus zwei Halbschalen 127a, 127b, welche durch keramische Isolierungen 129, 130 elektrisch voneinander getrennt sind. Innerhalb dieser Halbschalen 127a, 127b und elektrisch von diesen isoliert verlaufen weitere Halbschalen 125, 126, welche mit der Stromzuleitung 123 bzw. der Stromableitung 124 in Verbindung stehen. Der elektrische Aufbau und die Isolierschichten 128 entsprechen dem der Figur 10. Die Leitungen 123, 124 werden durch das Keramikstück 129 nach außen geführt. Wie aus Figur 13 zu erkennen ist, können beispielsweise zwei solche Katalysator-Trägerkörper 120a, 120b hintereinander und elektrisch in Reihe geschaltet in einem Mantelrohr untergebracht werden.

Figur 14 zeigt als Ausführungsbeispiel einen im wesentlichen in axialer Richtung, ggf. mäanderförmig vom Strom I (siehe Pfeil) durchflossenen Katalysator-Trägerkörper 140 und seine Einbindung in ein im Längsaxialschnitt dargestelltes Mantelrohr 141. An einem Ende ist der Katalysator-Trägerkörper 140 gut leitend 142, beispielsweise über einen Metallring, mit dem Mantelrohr 141 verbunden. Das andere Ende ist durch elektrisch isolierende Distanzhalter 148, die eine Art Schiebeverbindung bilden, vom Mantelrohr 141 getrennt. Diese oder beide Stirnseite(n) weist (bzw. weisen) eine elektrisch gut leitende Anschlußstrebe 146 auf, welche eine vergleichmäßigte Einleitung eines hohen elektrischen Stromes I in den Katalysator-Trägerkörper 140 begünstigt. Die Anschlußstrebe 146 ragt ein Stück, beispielsweise etwa 3 - 10 mm, in axialer Richtung in den Katalysator-Trägerkörper 140 hinein und ist mit dessen Blechen gut leitend verbunden, vorzugsweise hartgelötet. An der Anschlußstrebe 146 ist eine elektrische Zuleitung 143 gut leitend befestigt, welche durch eine isolierende Durchführung 145 durch das Mantelrohr 141 nach außen geführt ist. Die Zuleitung 143 weist einen elastisch verformbaren Bereich 144 auf, welcher thermische Längendehnungen des Katalysator-Trägerkörpers 140 gegenüber dem Mantelrohr 141 kompensieren kann. Die Zuleitung 143, 144 kann beispielsweise aus einem gebogenen dicken Blechstreifen aus hochtemperatur-korrosionsfestem Material bestehen.

Die Figuren 15 und 16 veranschaulichen verschiedene Ausführungsformen für die Einbindung von Anschlußstreben in die Stirnseite eines Katalysator-Trägerkörpers. Bei dem Katalysator-Trägerkörper 150 in Figur 15, der aus glatten 151 und gewellten 152 Blechen gewickelt ist, ist eine gerade Strebe 156 in einen entsprechenden Schlitz in der Stirnseite eingesetzt. In Figur 16 ist die Stirnseite eines Katalysator-Trägerkörpers 160 aus etwa S-förmig verschlungenen strukturierten Blechen 161, 162 dargestellt. Die Anschlußstrebe 166 ist dabei ebenfalls S-förmig. Eine solche Struktur entsteht beispielsweise, wenn die Anschlußstrebe 166 in den Blechstapel mit eingelegtwird, aus dem ein S-förmiger Katalysator-Trägerkörper durch Verschlingen der Enden des Blechstapels entsteht.

Figur 17 zeigt in schematischer Darstellung eine Formschlußverbindung zweier, elektrisch voneinander isolierter Blechlagen 171, 172, welche in der Lage ist, durch einen P feil angedeutete Kräfte in axialer Richtung aufzunehmen. Die Figur zeigt einen Längsschnitt durch zwei sich berührende Blechlagen 171, 172 im Bereich einer solchen formschlüssigen Verbindung 173. Eine solche formschlüssige Verbindung kann beispielsweise durch etwa quer zur Längsrichtung des Katalysator-Trägerkörpers verlaufende Rillen oder durch einzelne Sicken entstehen. Eine Isolierschicht 178, beispielsweise aus keramischem Material, trennt die beiden Blechlagen 171, 172 voneinander. Sofern die Tiefe d dieser Nuten oder Sicken oder dergleichen größer als die Dicke der isolierenden Schicht 178 ist, wird diese Schicht bei axialen Belastungen der formschlüssigen Verbindung 173 nicht auf Zug, sondern im wesentlichen auf Druck belastet, wodurch eine hohe Festigkeit der Verbindung in axialer Richtung erreicht wird.

Die vorliegende Erfindung und die genannten Ausführungsbeispiele eignen sich prinzipiell sowohl für die elektrische Beheizung von Startkatalysatoren wie auch für die Beheizung von Hauptkatalysatoren, soweit genügend elektrische Leistung zur Verfügung steht. Die Zusammenschaltung von mehreren Katalysator-Trägerkörpem parallel oder in Reihe ist je nach den gegebenen Umständen und Dimensionen möglich. Bei laufendem Motor und Stromerzeugung durch die Lichtmaschine können die Katalysatoren auch direkt durch Wechselstrom beheizt werden, wodurch nicht die gesamte benötigte Leistung zunächst gleichgerichtet werden muß. Im Gegensatz zu anderen elektrischen Einrichtungen am Fahrzeug sind die Katalysator-Trägerkörper unempfindlich gegen Spannungsschwankungen und können somit ggf. auch von einer ungeregelten, zusätzlichen Spannungsversorgung gespeist werden. Die erfindungsgemäßen elektrisch beheizbaren Katalysator-Trägerkörper eignen sich zur Reduzierung des Schadstoffausstoßes bei besonders strengen Anforderungen an die Emissionen in der Kaltstartphase eines Fahrzeuges. Die beschriebenen Wabenkörper haben zwar ihr Hauptanwendungsgebiet bei Aut-Katalysatoren, jedoch sind andere Anwendungen, z. B. als Heizer oder Verdampfer für Fluide etc. möglich.

**Patentansprüche**

1. Elektrisch leitfähiger Wabenkörper (50; 60; 80; 100; 110; 120; 140; 150; 160), insbesondere Trägerkörper für Abgaskatalysatoren, aus gewickelten oder gestapelten oder geschichteten Lagen zumindest teilweise strukturierter, hochtemperaturkorrosionsfester Bleche (51, 52; 61, 62; 71, 72; 81, 82; 91, 92; 101, 102; 121, 122; 151, 152; 161, 162; 171, 172), die eine Vielzahl von für ein Fluid durchströmbaren Kanälen bilden, vorzugsweise aus abwechselnden Lagen im wesentlichen glatter und gewellter Bleche, wobei die Bleche (51, 52; 61, 62; 71, 72; 81 82; 91, 92; 101, 102; 121, 122; 151, 152; 161, 162; 171, 172) eine Dicke von 0,03 bis 0,12 mm, vorzugsweise 0,03 bis 0,06 mm, autweisen und der Wabenkörper (50; 60; 80; 100; 110; 120; 140; 150; 160) durch Spalte (118) und/oder elektrisch isolierende Zwischenschichten (58; 68; 88; 98; 108; 128; 148; 178) bzw. Beschichtungen bezüglich seiner Querschnittsfläche und/oder seiner axialen Ausdehnung elektrisch unterteilt ist,
**dadurch gekennzeichnet,** daß zumindest ein Teilbereich des Wabenkörpers derart aus mindestens vier parallel von Strom durchflossenen benachbarten Blechlagen gebildet ist, daß der Wabenkörper einen elektrischen Widerstand zwischen 0,03 und 2 Ohm bildet, vorzugsweise zwischen 0,1 und 1 Ohm, insbesondere etwa 0,6 Ohm.

2. Wabenkörper nach Anspruch 1,
**dadurch gekennzeichnet,** daß der Wabenkörper (60; 80; 100) bezüglich seiner Querschnittsfläche und/oder seiner axialen Ausdehnung in teilweise gegeneinander elektrisch isolierte Teilbereiche unterteilt ist, die durch definierte elektrische Verbindungsbrücken (73; 65, 66; 116) alle oder gruppenweise elektrisch in Reihe geschaltet sind.

3. Wabenkörper nach Anspruch 1 oder 2, **dadurch gekennzeichnet**, daß jeder elektrische Strompfad aus acht bis zwölf parallel von Strom durchflossenen benachbarten Blechlagen besteht.

4. Wabenkörper nach Anspruch 1, 2 oder 3, **dadurch gekennzeichnet**, daß die mindestens vier parallel von Strom durchflossenen benachbarten Blechlagen mäanderförmig (57) zu einem Körper (50) geschichtet sind, wobei Zwischenschichten (58) die gegenseitige Isolierung der Mäanderschleifen bewirken.

5. Wabenkörper nach Anspruch 4, **dadurch gekennzeichnet**, daß im Bereich der Umlenkungen (73) die mindestens vier Schichten flach aneinander liegen, wobei zusätzliche, den elektrischen Widerstand in diesen Bereichen senkende Verstärkungen (74) vorhanden sein können.

6. Wabenkörper nach Anspruch 1, 2 oder 3, **dadurch gekennzeichnet**, daß der Wabenkörper (60) aus etwa U-förmig gebogenen Lagen (61, 62) besteht, welche gruppenweise gegeneinander durch Zwischenschichten (68) bzw. Beschichtungen elektrisch isoliert sind und welche an einer Tragwand (65, 66, 69) befestigt sind, wobei die Tragwand (65, 66, 69) elektrisch leitende, gegeneinander isolierte Abschnitte (65, 66) aufweist, welche jeweils eine Reihenschaltung von zwei oder mehr Gruppen von Lagen bewirken.

7. Wabenkörper nach Anspruch 1, 2 oder 3, **dadurch gekennzeichnet,** daß der Wabenkörper (100; 120) aus einem Stapel gegensinnig verschlungener Bleche (101, 102; 121, 122) besteht, wobei der Stapel zumindest an seiner Ober-und Unterseite elektrisch isolierende Schichten (108; 128) bzw. Beschichtungen aufweist und wobei zumindest die Enden der Bleche auf jeder Seite des Stapels elektrisch leitend je miteinander verbunden und je mit Anschlüssen (103, 104; 123, 124) zur Verbindung mit den beiden Polen einer Stromquelle (20, 30) versehen sind.

8. Wabenkörper nach Anspruch 7, **dadurch gekennzeichnet**, daß der Wabenkörper (100) einen kreisförmigen Querschnitt hat und die Höhe des Stapels kleiner gleich einem Drittel des Durchmessers des Querschnitts ist.

9. Wabenkörper nach einem der Ansprüche 1 bis 8, **dadurch gekennzeichnet**, daß mehrere Wabenkörper (100) scheibenweise hintereinander angeordnet und elektrisch parallel oder in Reihe geschaltet sind.

10. Wabenkörper nach einem der Ansprüche 1 bis 9, **dadurch gekennzeichnet,** daß die elektrisch isolierenden Zwischenschichten (58: 68; 88; 108; 128; 148; 178) bzw. Beschichtungen aus körnigem, keramischem Material bestehen, welches auf die Nachbarflächen aufgebracht ist, vorzugsweise flammgespritzt.

11. Wabenkörper nach einem der Ansprüche 1 bis 9, **dadurch gekennzeichnet**, daß die elektrisch isolierenden Zwischenschichten (58; 68; 88; 108; 128; 148; 178) aus Keramikteilen oder keramischen Fasermatten bestehen.

12. Wabenkörper nach Anspruch 11, **dadurch gekennzeichnet,** daß zur Isolierung der Bleche von einem metallischen Mantelrohr (90; 141) an diesem angelötete Keramikplättchen (98; 148) dienen.

13. Wabenkörper nach einem der Ansprüche 1 bis 12, **dadurch gekennzeichnet**, daß voneinander elektrisch isolierte Blechlagen (171, 172) durch Formschlußverbindungen (173) an einer axialen Verschiebung gegeneinander gehindert sind, wobei zur elektrischen Isolierung eine keramische Zwischenschicht (178) in die Formschlußverbindung einbezogen ist.

14. Wabenkörper nach einem der Ansprüche 1 bis 13, **dadurch gekennzeichnet,** daß bei einem im wesentlichen in axialer Richtung von elektrischem Strom durchströmbaren Wabenkörper (140; 150; 160) an einer oder beiden Stirnseiten mindestens (je) eine elektrisch gut leitende Anschlußstrebe (146; 156; 166) vorhanden ist, welche die gleichmäßige Verteilung der elektrischen Stromdichte über den Querschnitt des Wabenkörpers (140; 150; 160) verbessert.

15. Wabenkörper nach Anspruch 14, **dadurch gekennzeichnet**, daß mindestens eine der Anschlußstreben (146) mit einer elastischen (144) elektrisch gut leitenden, hochtemperaturtesten, durch eine elektrisch isolierende Durchführung (145) nach außen geführte Zuleitung (143) verbunden ist, welche für hohe Stromstärken, beispielsweise 50 bis 400 A, geeignet ist, aber z. B. thermisch bedingte Relativbewegungen zwischen Anschlußstrebe (146) und Durchführung (145) aufnehmen kann.

16. Verfahren zum Betrieb bzw. zur Überwachung eines elektrisch leitfähigen, zumindest teilweise gegenüber seinem Mantel und seinen Halterungen isolierten Katalysator-Tägerkörpers mit katalytisch aktiver Beschichtung im Abgassystem eines Verbrennungsmotors nach Anspruch 1, wobei der (der Temperatur pro portionale) elektrische Widerstand des Katalysator-Trägekörpers insgesamt oder in einem Teilbereich gemessen und zur Überwachung und/oder zur Regelung des Katalysator-Abgas-Systems herangezogen wird.

17. Verfahren nach Anspruch 16, **dadurch gekennzeichnet,** daß bei einem elektrischen Widerstand des Katalysator-Trägerkörpers unterhalb oder beim Unterschreiten einer vorbestimmbaren Schwelle dieser mit einer elektrischen Heizleistung beaufschlagt wird, bis die Schwelle erreicht bzw. wieder erreicht ist, wobei die vorbestimmbare Schwelle vorzugsweise dem Widerstand des Katalysator-Trägerkörpers wenig oberhalb der Temperatur entsprechen soll, bei dem die katalytische Reaktion selbsterhaltend einsetzt.

18. Verfahren nach Anspruch 16 oder 17, **dadurch gekennzeichnet**, daß der Widerstand des Katalysator-Trägerkörpers in vorgebbaren Zeitabständen gemessen wird, indem zumindest kurzzeitig die vom Katalysator-Trägerkörper aufgenommene Heizleistung oder eine dieser proportionale Größe gemessen wird.

**Claims**

1. Electrically conductive honeycomb body (50; 60; 80; 100; 110; 120; 140; 150; 160), in particular a carrier body for exhaust gas catalysts, of wound or stacked or layered layers of at least partially structured high-temperature corrosion-proof metal sheets (51, 52; 61, 62; 71, 72; 81, 82; 91, 92; 101, 102; 121, 122; 151, 152; 161, 162; 171, 172) which form a plurality of channels through which a fluid can flow, preferably of alternating layers of substantially smooth and corrugated metal sheets, the metal sheets (51, 52; 61, 62; 71, 72; 81, 82; 91, 92; 101, 102; 121, 122; 151, 152; 161, 162; 171, 172) having a thickness of from 0.03 to 0.12 mm, preferably from 0.03 to 0.06 mm, and the honeycomb body (50; 60; 80; 100; 110; 120; 140; 150; 160) being electrically subdivided by gaps (118) and/or electrically insulating intermediate layers (58; 68; 88; 98; 108; 128; 148; 178) or coatings with respect to its cross-sectional area and/or its axial extent, characterised in that at least one subzone of the honeycomb body is formed from at least four adjacent metal sheet layers, through which current flows in parallel, so that the honeycomb body establishes an electrical resistance of between 0.03 and 2 ohm, preferably of between 0.1 and 1 ohm, in particular approximately 0.6 ohm.

2. Honeycomb body according to claim 1, characterised in that with respect to its cross-sectional area and/or its axial extent the honeycomb body (60; 80; 100) is subdivided into subzones which are partially electrically insulated with respect to each other and which are all, or in groups, electrically connected in series by means of specific electrical connection bridges (73; 65, 66; 116).

3. Honeycomb body according to claim 1 or 2, characterised in that each electrical current path comprises eight to twelve adjacent metal sheet layers through which current flows in parallel.

4. Honeycomb body according to claim 1,2 or 3, characterised in that the at least four adjacent metal sheet layers through which current flows in parallel are layered in meandering fashion (57) to form a body (50), with intermediate layers (58) effecting the mutual insulation of the meandering loops.

5. Honeycomb body according to claim 4, characterised in that in the region of the deflections (73) the at least four layers rest flat against one another, possibly with additional reinforcements (74) lowering the electrical resistance in these areas.

6. Honeycomb body according to claim 1, 2 or 3, characterised in that the honeycomb body (60) comprises layers (61, 62) which are curved in a substantially U-shaped manner, are electrically insulated in groups with respect to each other by means of intermediate layers (68) or coatings and are secured to a carrier wall (65, 66, 69), the carrier wall (65, 66, 69) having electrically conductive portions (65, 66) which are insulated with respect to each other and which each effect a series connection of two or more groups of layers.

7.  Honeycomb body according to claim 1, 2 or 3, characterised in that the honeycomb body (100; 120) comprises a stack of metal sheets (101, 102; 121, 122) entwined in opposite directions, with the stack having electrically insulating layers (108; 128) or coatings at least on its top and bottom surface, and with at least the ends of the metal sheets each being connected together on each side of the stack in an electrically conductive manner and each being provided with terminals (103, 104; 123, 124) for connection to the two poles of a current source (20, 30).

8.  Honeycomb body according to claim 7, characterised in that the honeycomb body (100) has a circular cross-section and the height of the stack is smaller or equal to a third of the diameter of the cross-section.

9.  Honeycomb body according to one of claims 1 to 8, characterised in that several honeycomb bodies (100) are arranged disc-wise one behind the other and are electrically connected in parallel or in series.

10. Honeycomb body according to one of claims 1 to 9, characterised in that the electrically insulating intermediate layers (58; 68; 88; 108; 128; 148; 178) or coatings consist of granular ceramic material which is applied to the adjacent surfaces, preferably by flame spraying.

11. Honeycomb body according to one of claims 1 to 9, characterised in that the electrically insulating intermediate layers (58; 68; 88; 108; 128; 148; 178) are made of ceramic parts or ceramic fibre mats.

12. Honeycomb body according to claim 11, characterised in that ceramic platelets (98; 148) brazed to a metallic jacket tube (90; 141) are used to insulate the metal sheets from said jacket tube.

13. Honeycomb body according to one of claims 1 to 12, characterised in that form-locking connections (173) prevent metal sheet layers (171, 172), which are electrically insulated from each other, from being displaced axially with respect to each other, with a ceramic intermediate layer (178) being incorporated into the form-locking connection for the purposes of electrical insulation.

14. Honeycomb body according to one of claims 1 to 13, characterised in that in the case of a honeycomb body (140; 150; 160), through which an electric current can flow substantially in the axial direction, on one or both faces there is at least (in each case) one connection strut (146; 156; 166) which has good electrical conductivity and which improves the uniform distribution of the electrical current density over the cross-section of the honeycomb body (140; 150; 160).

15. Honeycomb body according to claim 14, characterised in that at least one of the connection struts (146) is connected to an elastic (144), high temperature-resistant supply line (143) which has good electrical conductivity, is guided outwards through an electrically insulating bushing (145) and is suitable for high current strengths, for example 50 to 400 A, but can absorb e.g. relative movements between the connection strut (146) and the bushing (145) due to heat.

16. Process for operating or monitoring an electrically conductive catalyst carrier body at least partially insulated with respect to its jacket and its holding means and having a catalytically active coating in the exhaust gas system of an internal combustion engine according to claim 1, wherein the (temperature-proportional) electrical resistance of the catalyst carrier body is measured as a whole or in a subzone and is used for monitoring and/or regulating the catalyst exhaust gas system.

17. Process according to claim 16, characterised in that in the case of an electrical resistance of the catalyst carrier body which is below a predeterminable threshold or which falls below a predeterminable threshold an electrical heating power is applied thereto until the threshold is reached, or reached again, in which case the predeterminable threshold is preferably to correspond to the resistance of the catalyst carrier body slightly above the temperature at which the catalytic reaction commences in a self-maintaining manner.

18. Process according to claim 16 or 17, characterised in that the resistance of the catalyst carrier body is measured at predeterminable time intervals in that the heating power absorbed by the catalyst carrier body or a variable proportional thereto is measured at least briefly.

**Revendications**

1.  Corps en nid d'abeille (50; 60; 80; 100; 110; 120; 140; 150; 160), conducteur de l'électricité, notamment support de catalyseurs de gaz d'échappement, constitué de couches enroulées ou empilées ou stratifiées de tôles (51, 52; 61, 62; 71, 72; 81, 82; 91, 92; 101, 102; 121, 122; 151, 152; 161, 162; 171, 172), au moins partiellement structurées et résistant à la corrosion à température élevée, qui forment un grand nombre de canaux dans lesquels peut passer un fluide, de préférence constitués de couches alternées de tôles sensiblement planes et ondulées, les tôles (51, 52; 61, 62; 71, 72; 81, 82; 91, 92; 101, 102; 121, 122; 151, 152; 161, 162; 171, 172), ayant une épaisseur de 0,03 à 0,12 mm et, de préférence, de 0,03 à 0,06 mm et le corps en nid d'abeille (50; 60; 80; 100; 110; 120; 140; 150; 160), étant subdivisé électriquement par des fentes (118) et/ou par des couches intermédiaires (58; 68; 88; 98; 108; 128; 148; 178) ou des revêtements électriquement isolants dans sa surface de section transversale et/ou dans son étendue axiale, caractérisé en ce gu'au moins une partie du corps en nid d'abeille est formée d'au moins quatre couches de tôles voisines dans lesquelles du courant électrique passe en parallèle, en ce que le corps en nid d'abeille forme, de façon à obtenir au moins un trajet de courant électrique dans les tôles (51, 52; 61, 62; 71, 72; 81, 82; 91, 92; 101, 102; 121, 122; 151, 152; 161, 162; 171, 172), une résistance électrique comprise entre 0,03 et 2 Ohm, de préférence entre 0,1 et 1 Ohm, et notamment de 0,6 Ohm environ.

2. Corps en nid d'abeille suivant la revendication 1, caractérisé en ce que le corps en nid d'abeille (60; 80; 100) est subdivisé dans sa surface de section transversale et/ou dans son étendue axiale en régions partielles, partiellement isolées électriquement les unes des autres et montées toutes ou par groupes électriquement en série par des ponts électriques de liaison (73; 65, 66; 116) définis.

3. Corps en nid d'abeille suivant la revendication 1 ou 2, caractérisé en ce que chaque trajet électrique de courant est constitué de huit à douze couches de tôles voisines dans lesquelles du courant électrique passe en parallèle.

4. Corps en nid d'abeille suivant la revendication 3, caractérisé en ce que les au moins quatre couches de tôles voisines dans lesquelles du courant électrique passe en parallèle sont stratifiées en forme de méandres (57) en un corps (50), des couches intermédiaires (58) donnant l'isolation mutuelle des boucles des méandres.

5. Corps en nid d'abeille suivant la revendication 4, caractérisé en ce que dans la région des retours (73) les au moins quatre couches s'appliquent à plat l'une sur l'autre, des renforcements (74) supplémentaires et diminuant la résistance électrique dans ces régions pouvant être présents.

6. Corps en nid d'abeille suivant la revendication 1, 2 ou 3, caractérisé en ce que le corps en nid d'abeille (60) est constitué de couches (61, 62) recourbées à peu près en forme de U, qui sont isolées électriquement les unes des autres par groupes par des couches intermédiaires (68) ou par des revêtements et qui sont fixées à une paroi-support (65, 66, 69), la paroi-support (65, 66, 69) comportant des sections conductrices de l'électricité mutuellement isolées et faisant que deux ou plusieurs groupes de couches sont montés en série.

7. Corps en nid d'abeille suivant la revendication 1, 2 ou 3, caractérisé en ce que le corps en nid d'abeille (100, 120) est constitué d'une pile de tôles (101, 102; 121, 122) entrelacées en sens opposé, la pile comportant au moins sur son côté supérieur et inférieur des couches (108; 128) ou des revêtements électriquement isolants et au moins les extrémités des tôles de chaque côté de la pile étant reliées les unes aux autres d'une manière électriquement conductrice et étant munies de bornes (103, 104; 123, 124) de liaison aux deux pôles d'une source de courant (20; 30).

8. Corps en nid d'abeille suivant la revendication 7, caractérisé en ce que le corps en nid d'abeille (100) a une section transversale circulaire et la hauteur de la pile est inférieure au tiers du diamètre de la section transversale.

9. Corps en nid d'abeille suivant l'une des revendications 1 à 8, caractérisé en ce que plusieurs corps en nid d'abeille sont disposés l'un derrière l'autre tranche par tranche et sont montés électriquement en parallèle ou en série.

10. Corps en nid d'abeille suivant l'une des revendications 1 à9, caractérisé en ce que les couches intermédiaires (58; 68; 88; 98; 108; 128; 148; 178) ou les revêtements électriquement isolants sont en matériau céramique en grains, qui est déposé sur les surfaces voisines, de préférence par pistolage à la flamme.

11. Corps en nid d'abeille suivant l'une des revendications 1 à 9, caractérisé en ce que les couches intermédiaires (58; 68; 88; 98; 108; 128; 148; 178) électriquement isolantes sont en pièces de céramique ou en nappes de fibres céramiques.

12. Corps en nid d'abeille suivant la revendication 11, caractérisé en ce que pour l'isolation des tôles d'un tube-enveloppe (90; 141) métallique, on se sert de plaquettes de céramique (98; 148) brasées à celui-ci.

13. Corps en nid d'abeille suivant l'une des revendications 1 à 12, caractérisé en ce que des couches de tôles (171, 172) isolées électriquement les unes des autres sont empêchées, par liaison par complémentarité de formes (173), de se décaler axialement les unes par rapport aux autres, une couche intermédiaire (178) en céramique étant intégrée à la liaison par complémentarité de formes pour l'isolation électrique.

14. Corps en nid d'abeille suivant l'une des revendications 1 à 13, caractérisé en ce que, pour un corps en nid d'abeille (140; 150;160), dans lequel du courant électrique peut passer sensiblement dans la direction axiale, il est prévu sur l'un des côtés frontaux ou sur les deux côtés frontaux au moins respectivement une entretoise de raccordement (146; 156; 166) qui améliore l'uniformité de la répartition de la densité électrique de courant sur la section transversale du corps en nid d'abeille (140; 150; 160).

15. Corps en nid d'abeille suivant la revendication 14, caractérisé en ce qu'au moins l'une des entretoises de raccordement (146) est reliée par une traversée (145) électriquement isolante à un conducteur (143) élastique (144), bon conducteur de l'électricité, résistant aux températures élevées, menant à l'extérieur et qui convient pour de grandes intensités de courant, par exemple de 50 à 400 A, mais qui peut absorber par exemple des mouvements relatifs dûs à la chaleur entre l'entretoise de raccordement (146) et la traversée (145).

16. Procédé pour faire fonctionner et pour contrôler un support de catalyseur, électriquement conducteur, au moins partiellement isolé par rapport à son enveloppe et par rapport à ses fixations et comportant un revêtement actif catalytiquement dans le système pour les gaz d'échappement d'un moteur à combustion interne suivant la revendication 1, qui consiste à mesurer la résistance électrique (proportionnelle à la température) du support de catalyseur dans son ensemble ou dans l'une de ses parties et à en tirer parti pour le contrôle et/ou pour le réglage du système catalyseur-gaz d'échappement.

17. Procédé suivant la revendication 16 ou 17, caractérisé en ce qu'il consiste, dans le cas d'une résistance électrique du support de catalyseur inférieure à un seuil qui peut être prescrit ou lorsque ce seuil est franchi vers le bas, à alimenter ce support de catalyseur par une puissance de chauffage électrique jusqu'à ce que le seuil soit atteint ou jusqu'à ce qu'il soit atteint à nouveau, le seuil qui peut être prescrit pour la résistance du support de catalyseur devant être de peu supérieur à la température à laquelle la réaction catalytique se maintient d'elle-même.

18. Procédé suivant la revendication 16 ou 17, caractérisé en ce qu'il consiste à mesurer la résistance du support de catalyseur à des intervalles de temps qui peuvent être prescrits, en mesurant au moins brièvement la puissance calorifique absorbée par le support de catalyseur ou en grandeur qui lui est proportionnelle.

FIG 1

FIG 3

FIG 2

FIG 4

FIG 5

FIG 6

FIG 7

FIG 8

FIG 9

EP 0 412 103 B2

FIG 10

FIG 11

FIG 12

FIG 13

FIG 14

FIG 15

FIG 16

FIG 17